# EUROPÄISCHE PATENTSCHRIFT

(11) **EP 2 037 296 B1**
(45) Veröffentlichungstag und Bekanntmachung des Hinweises auf die Patenterteilung: **09.08.2017**
(21) Anmeldenummer: 08010855.8
(22) Anmeldetag: 14.06.2008
(51) Int. Cl.: G01V 8/20

(54) **Lichtgitter**
Light grid
Barrière lumineuse

(30) Priorität: 12.09.2007 DE 102007043378
(43) Veröffentlichungstag der Anmeldung: 18.03.2009
(73) Patentinhaber: Leuze electronic GmbH + Co. KG, 73277 Owen/Teck (DE)
(72) Erfinder: Argast, Martin, 72584 Hülben (DE); Fauth, Siegfried, 73230 Kirchheim / Teck (DE); Knauss, Karsten, 73095 Albertshausen (DE); Bunz, Oliver, 72639 Neuffen (DE)
(74) Vertreter: Ruckh, Rainer Gerhard

(56) Entgegenhaltungen:
- DE-A1- 4 311 691
- DE-A1- 10 033 905
- DE-U1-202007 007 290

## Beschreibung

Die Erfindung betrifft ein Lichtgitter.

Lichtgitter der in Rede stehenden Art weisen zur Erfassung von Objekten in einem Überwachungsbereich eine Anordnung von Sendelichtstrahlen emittierenden Sendern und eine Anordnung von den Sendern zugeordneten Empfängern auf

Gemäß einer ersten Anordnung können die Sender einerseits und die Empfänger andererseits in separaten Gehäusen an gegenüberliegenden Rändern angeordnet sein, so dass bei freiem Überwachungsbereich die von einem Sender emittierten Sendelichtstrahlen auf einen dem Sender zugeordneten Empfänger treffen. Somit bilden jeweils ein Sender und der zugeordnete Empfänger eine Strahlachse des Lichtgitters. Eine Objektdetektion liegt vor, wenn von einem Objekt wenigstens eine Strahlachse unterbrochen wird.

Gemäß einer zweiten Anordnung sind die Sender und Empfänger in einem Gehäuse an einem ersten Rand des Überwachungsbereichs angeordnet, während sich am gegenüberliegenden Rand des Überwachungsbereichs ein Reflektor befindet. Bei freiem Strahlengang treffen die von einem Sender emittierten Sendelichtstrahlen auf den Reflektor und werden von dort nun auf einen, diesem Sender zugeordneten, Empfänger geführt. Auch in diesem Fall bilden der Sender und der eine, diesem Sender zugeordnete, Empfänger eine Strahlachse des Lichtgitters. Eine Objektdetektion liegt wiederum dann vor, wenn durch einen Objekteingriff in den Überwachungsbereich wenigstens eine Strahlachse unterbrochen wird.

Die DE 200 22 809 U1 betrifft eine optische Sensoranordnung zur Erfassung von Objekten in einem Überwachungsbereich mit einer ersten Anzahl von in Abstand zueinander an einem Ende des Überwachungsbereichs angeordneten, Sendelichtstrahlen emittierenden Sendern, wobei die Sendelichtstrahlen den Überwachungsbereich vollständig ausleuchten und mit einer zweiten Anzahl von am gegenüberliegenden Ende des Überwachungsbereichs angeordneten Empfängern, auf welche die Sendelichtstrahlen gerichtet sind. Zur Erfassung von Objekten sind die Empfangssignale an den Ausgängen paarweise jeweils auf ein Differenzglied zur Bildung der Differenz der Empfangssignale der jeweiligen Empfänger geführt, die Ausgangssignale der Differenzglieder sind einer Schwellwerteinheit zugeführt, in welcher aus den Ausgangssignalen ein binäres Schaltsignal abgeleitet wird.

Nachteilig bei dieser Sensoranordnung ist,
- dass auf beiden Seiten aktive Elemente benötigt werden (Lichtschranke),
- dass die Sender weitwinklig abstrahlen müssen um eine sichere Überlappung (lückenloses Lichtband) zu generieren,
- dass dennoch noch im Bereich vor den Sendern Detektionslücken auftreten,
- und dass eine Vielzahl von sehr dicht aneinander liegenden Empfängern vorgesehen sein muss.

Die DE 20 2007 007 290 U1 betrifft eine optoelektronische Sensoranordnung mit wenigstens zwei Lichtsendern zum Aussenden von Licht in einen Überwachungsbereich, welcher von Objekten in einer Bewegungsrichtung durchquert wird, mit wenigstens zwei Lichtempfängern zum Empfang von Licht aus dem Überwachungsbereich und zur Erzeugung von Empfangssignalen, und mit einer Auswerteeinheit zum Auswerten der Empfangssignale, wobei die Lichtsender und die Lichtempfänger jeweils quer zur Bewegungsrichtung nebeneinander angeordnet sind. Wenigstens einer der Lichtempfänger weist wenigstens zwei Empfangssegmente zur Erzeugung von jeweiligen Empfangssignalen auf, welche jeweils parallel zur Bewegungsrichtung nebeneinander angeordnet sind, wobei die Auswerteeinheit eine Einrichtung zur Bestimmung der Bewegungsrichtung und/oder der Bewegungsgeschwindigkeit aus den Empfangssignalen der Empfangssegmente wenigstens eines Lichtempfängers aufweist.

Die DE 100 33 905 A1 betrifft eine optische Sensoranordnung zur Erfassung von Objekten in einem Überwachungsbereich mit einer ersten Anzahl von in Abstand zueinander an einem Ende des Überwachungsbereichs angeordneten, Sendelichtstrahlen emittierenden Sendern, wobei die Sendelichtstrahlen den Überwachungsbereich vollständig ausleuchten, und mit einer zweiten Anzahl von am gegenüberliegenden Ende des Überwachungsbereichs angeordneten Empfängern, auf welche die Sendelichtstrahlen gerichtet sind. Zur Erfassung von Objekten sind die Empfangssignale an den Ausgängen paarweise jeweils auf ein Differenzglied zur Bildung der Differenz der Empfangssignale der jeweiligen Empfänger geführt. Die Ausgangssignale der Differenzglieder sind einer Schwellwerteinheit zugeführt, in welcher aus den Ausgangssignalen ein binäres Schaltsignal abgeleitet wird.

Der Erfindung liegt die Aufgabe zugrunde, ein Lichtgitter bereitzustellen, mittels dessen bei geringem konstruktivem Aufwand auch kleine Objekte schnell und sicher detektiert werden können.

Zur Lösung dieser Aufgabe sind die Merkmale des Anspruchs 1 vorgesehen. Vorteilhafte Ausführungsformen und zweckmäßige Weiterbildungen der Erfindung sind in den Unteransprüchen beschrieben.

Das erfindungsgemäße Lichtgitter dient zur Erfassung von Objekten in einem Überwachungsbereich und umfasst eine Sender/Empfänger-Anordnung von Sendelichtstrahlen emittierenden und Empfangslichtstrahlen empfangenden Empfängern an einem ersten Rand des Überwachungsbereichs und einem am gegenüberliegenden zweiten Rand des Überwachungsbereichs angeordneten Reflektor. Die Sender-Empfänger-Anordnung ist so ausgebildet, dass die in einem Gehäuse angeordneten Sender und Empfänger alternierend in zwei versetzt zueinander liegenden Reihen angeordnet sind, und dass zu jedem Sender wenigstens zwei benachbarte Empfänger vorhanden sind, so dass bei freiem Überwachungsbereich die Sendelichtstrahlen des jeweiligen Senders über den Reflektor als Empfangslichtstrahlen auf die benachbarten Empfänger geführt sind, die Sender einzeln nacheinander aktiviert sind und für jeden aktivierten Sender die Differenz der Empfangssignale der benachbarten Empfänger ausgewertet wird. Ein Objekt gilt im Überwachungsbereich als erkannt, wenn die Differenz der Empfangssignale von einem Sollwert abweicht.

Mit dem erfindungsgemäßen Lichtgitter können auch kleine Objekte im Überwachungsbereich schnell und sicher erkannt werden. Dabei ist weiter vorteilhaft, dass alle Sender und Empfänger des Lichtgitters auf einer Seite des Überwachungsbereichs angeordnet sind und so in einem Gehäuse untergebracht und von einer einzigen Auswerteeinheit angesteuert werden können. Das erfindungsgemäße Lichtgitter weist somit einen konstruktiv einfachen Aufbau auf.

Wesentlich für eine sichere Detektion von kleinen Objekten ist eine lückenlose Ausleuchtung des Überwachungsbereichs mit den von den Sendern emittierten Sendelichtstrahlen. Dies wird einerseits durch eine geeignete Abstrahlcharakteristik der Sendelichtstrahlen erzielt, wobei hierfür geeignete Sendeoptiken den Sendern vorgeordnet sind. Weiterhin bilden die Sender mit den Empfängern alternierende, mehrzeilige Anordnungen, wobei die Sender und Empfänger der einzelnen Reihen versetzt angeordnet sind. Durch die versetzte Reihenanordnung wird erreicht, dass aufeinander folgende Sender der Sender/Empfänger-Anordnung sehr dicht, das heißt in geringen Abständen zueinander liegen, wodurch eine lückenlose Ausleuchtung des Überwachungsbereichs mit den Sendelichtstrahlen leicht möglich wird.

Ein weiterer Vorteil der versetzten Reihenanordnung der Sender/Empfängeranordnung besteht darin, dass immer wenigstens zwei Empfänger dicht an einem Sender anliegen.

Der jeweilige Sender und die beiden diesem zugeordneten Empfänger bilden Basiseinheiten, die zur Objektdetektion verwendet werden, in dem bei Aktivierung dieses Senders die Differenz der Empfangssignale der beiden angrenzenden Empfänger ausgewertet wird. Dies unterscheidet das erfindungsgemäße Lichtgitter von bekannten Lichtgittern, bei welchen zur Ausbildung einer Strahlachse immer nur ein Empfänger einem Sender zugeordnet ist. Durch die erfindungsgemäße Differenzauswertung der Empfangssignale zweier dicht an den jeweiligen Sendern angrenzenden Objekte können gerade auch kleine Objekte schnell und sicher erkannt werden.

Ein weiterer Vorteil besteht darin, dass bei der Objektdetektion die Differenzen der Empfangssignale der beiden dem jeweiligen Sender zugeordneten Empfänger mit einem Sollwert verglichen werden, der in einem Einlernvorgang bei freiem Überwachungsbereich des Lichtgitters bestimmt wird. Dadurch wird eine besonders große Detektionssicherheit bei der Objekterfassung erzielt.

Als zusätzliches Kriterium zur Objekterfassung wird vorzugsweise eine Schwellwertbewertung der Empfangssignale der einzelnen Empfänger durchgeführt. Dabei gilt ein Objekt im Überwachungsbereich als erkannt, wenn das Empfangssignal wenigstens eines Empfängers unterhalb des Schwellwerts liegt. Dies führt zu einer weiteren Erhöhung der Detektionssicherheit.

In einer besonders vorteilhaften Ausgestaltung der Erfindung kann das Lichtgitter durch eine geeignete Parametrisierung sowohl in einem Schaltbetrieb als auch in einem Messbetrieb betrieben werden.

Im Schaltbetrieb wird im Lichtgitter ein binäres Schaltsignal generiert, dessen Schaltzustände "Objekt erkannt" oder "freier Überwachungsbereich" angeben ob sich ein Objekt im Überwachungsbereich befindet oder nicht, das heißt es erfolgt eine bloße Anwesenheitskontrolle von Objekten. Im Messbetrieb können dagegen Zusatzinformationen über Objekte erfasst und ausgegeben werden, wie zum Beispiel Objekthöhe und Objektlage.

Die Erfindung wird im Folgenden anhand den Ausführungsbeispielen und der Zeichnungen erläutert. Es zeigen:
- Figur 1:: Blockschaltbild einer ersten Ausführungsform eines Lichtgitters.
- Figur 2:: Optikanordnung einer zweiten Ausführungsform eines Lichtgitters
a) Draufsicht
b) Längsschnittdarstellung.
- Figur 3a-d:: Darstellungen einzelner Detektionsschritte für das Lichtgitter gemäß Figur 2.
- Figur 4:: Zeitdiagramm der Sendelichtpulse der Sender des Lichtgitters gemäß Figur 2.
- Figur 5:: Prinzipschaltbild des Verstärkerschaltnetzwerks des Lichtgitters gemäß Figur 2.

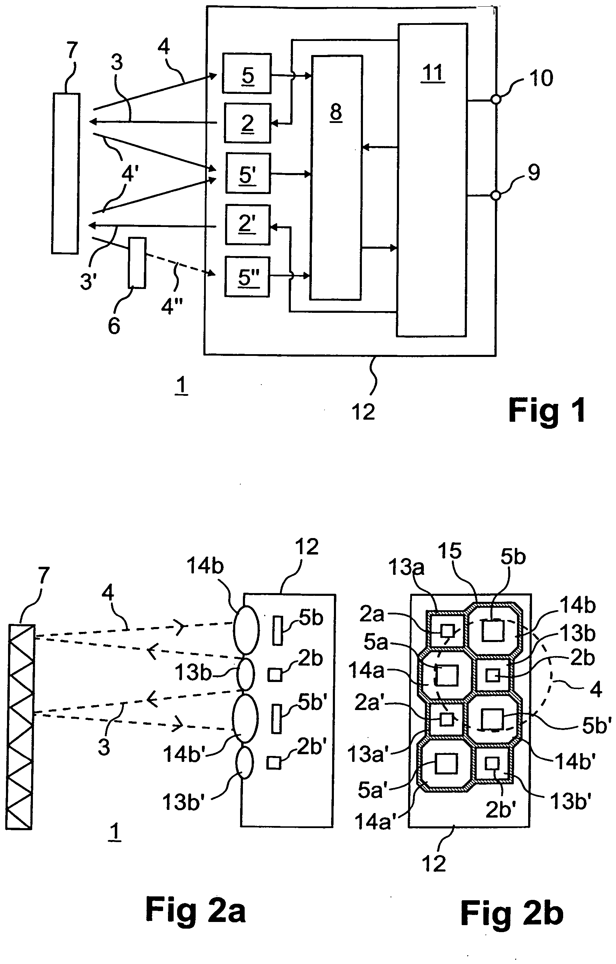

Figur 1 zeigt schematisch eine erste Ausführungsform eines Lichtgitters 1 zur Objekterfassung in einem Überwachungsbereich. Das Lichtgitter 1 weist eine alternierende Anordnung von Sendern 2, 2', welche Sendelichtstrahlen 3, 3' emittieren und Empfangslichtstrahlen 4, 4', 4" empfangenden Empfängern 5, 5', 5" auf.

Wie aus Figur 1 ersichtlich, sind diese aktiven Komponenten des Lichtgitters 1 in einem Gehäuse 12 integriert, das an einem Rand des Überwachungsbereichs angeordnet ist. An dem gegenüberliegenden Rand des Überwachungsbereichs befindet sich ein Reflektor 7 als passive Komponente des Lichtgitters 1. Bei freiem Überwachungsbereich treffen die von den Sendern 2, 2' emittierten Sendelichtstrahlen 3, 3' auf den Reflektor 7 und werden als Empfangslichtstrahlen 4, 4', 4" zu den Empfängern 5, 5', 5" zurückreflektiert. Bei einem Eingriff eines Objekts 6 in den Überwachungsbereich treffen die Sendelichtstrahlen 3, 3' wenigstens eines Senders 2, 2' auf das Objekt 6 und gelangen somit nicht mehr zum Reflektor 7.

Im Gehäuse 12 des Lichtgitters 1 befinden sich weiterhin ein Verstärkerschaltnetzwerk 8 sowie eine Auswerteeinheit 11, an welche ein Schaltausgang 9 und eine Schnittstelle 10 angeschlossen sind. Die Auswerteeinheit 11 tauscht mit dem Verstärkerschaltnetzwerk 8 über Zuleitungen Daten aus. Die Auswerteeinheit 11 steuert weiterhin die Sender 2, 2' derart an, dass diese periodisch alternierend Sendelichtstrahlen 3, 3' in Form von Sendelichtpulsen emittieren. Die Empfangssignale an den Ausgängen der Empfänger 5, 5', 5" werden dem Verstärkerschaltnetzwerk 8 zugeführt. Dort werden jeweils paarweise die Differenzen der Empfangssignale benachbarter Empfänger 5, 5', 5" gebildet. Diese werden dann der Auswerteeinheit 11 zur weiteren Auswertung zugeführt.

Der Betrieb des Lichtgitters 1 erfolgt dabei derart, dass die Sender 2, 2' zyklisch einzeln nacheinander aktiviert werden. Für den jeweils aktiven Sender 2, 2' wird im Verstärkerschaltnetzwerk 8 die Differenz der Empfangssignale der an diesen angrenzenden Empfängern 5, 5', 5" gebildet. Bei Aktivierung des Senders 2 sind dies die Empfänger 5, 5'. Bei Aktivierung des Senders 2' sind dies die Empfänger 5', 5".

Zur Generierung eines binären Schaltsignals werden die Differenzen der Empfangssignale jeweils mit einem Sollwert verglichen, welcher in einem Einlernvorgang vor Inbetriebnahme des Lichtgitters 1 ermittelt wird. Vorzugsweise werden die Sollwerte aus den Pegeln der Empfangssignale abgeleitet, die bei freiem Überwachungsbereich erhalten werden. Das Schaltsignal nimmt dann den Schaltzustand "freier Überwachungsbereich" ein, wenn die Differenzen der Empfangssignale mit den Sollwerten, vorzugsweise innerhalb vorgegebener Toleranzgrenzen, übereinstimmen. Bei Nichtübereinstimmung wenigstens einer Differenz der Empfangssignale mit dem jeweiligen Sollwert nimmt das Schaltsignal den Schaltzustand "Objekt erkannt" ein.

Die Figuren 2a, 2b zeigen eine Optikanordnung eines zweiten Ausführungsbeispiel eines Lichtgitters 1. Die im Gehäuse 12 angeordneten Sender 2a, 2a', 2b, 2b' und Empfänger 5a, 5a', 5b, 5b' sind alternierend in zwei versetzt zueinander liegenden Reihen angeordnet. Jedem Sender 2a, 2a', 2b, 2b' ist eine Sendelinse 13a, 13a', 13b, 13b' vorgeordnet. Jedem Empfänger 5a, 5a', 5b, 5b' ist eine Empfangslinse 14a, 14a', 14b, 14b' vorgeordnet.

Durch die versetzte Reihenanordnung liegen neben jeder Sendelinse 13a, 13a', 13b, 13b' immer dicht benachbart mindestens zwei Empfangslinsen 14a, 14a', 14b, 14b', wobei diese Optikelemente in einem Tubus 15 integriert sind.

Die Anordnung gemäß Figur 2 kann periodisch erweitert werden, das heißt es können mehrere Module wie in Figur 2 aneinandergereiht werden.

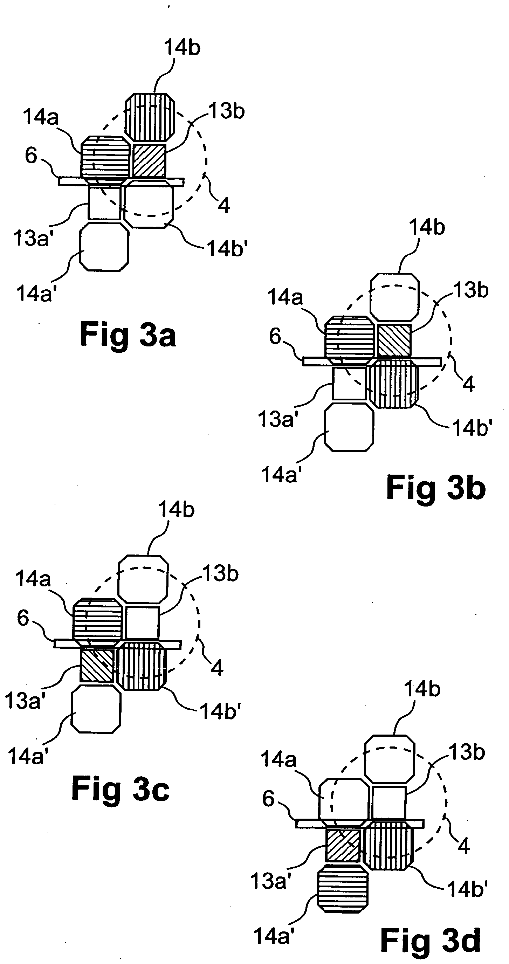

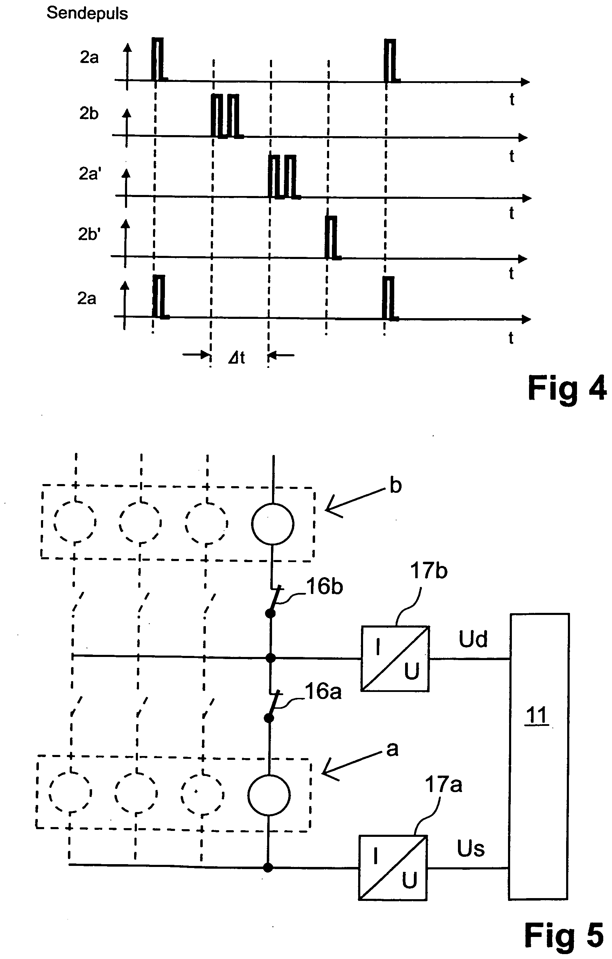

In den Figuren 3a bis 3d ist die Arbeitsweise des Lichtgitters 1 gemäß Figur 2 veranschaulicht, wobei Figur 4 den zugehörigen Zeitablauf der Senderaktivierung zeigt.

Wie aus Figur 4 ersichtlich, werden die Sender 2a, 2a', 2b, 2b' des Lichtgitters 1 gemäß Figur 2 innerhalb diskreter, identischer Zeitintervalle Δt periodisch einzeln nacheinander aktiviert.

Der erste Sender 2a und der letzte Sender 2b' der Anordnung von Figur 2 weisen jeweils nur zwei benachbarte Empfänger 5a, 5b beziehungsweise 5a', 5b' auf, das heißt jeweils nur ein benachbartes Empfängerpaar.

Daher werden diese Sender 2a, 2b' wie aus Figur 4 innerhalb eines Zeitintervalls Δt jeweils nur einmal aktiviert. Bei der Aktivierung des Senders 2a wird die Differenz der hierbei erhaltenen Empfangssignale der Empfänger 5a, 5b gebildet und zur Bildung des Schaltsignals mit dem Sollwert verglichen. Bei der Aktivierung des Senders 2b' wird die Differenz der hierbei erhaltenen Empfangssignale der Empfänger 5a', 5b' gebildet.

Die mittleren Sender 2b, 2a' der Anordnung gemäß Figur 2 weisen dagegen jeweils drei benachbarte, unmittelbar angrenzende Empfänger 5a, 5a', 5b, 5b' auf. Dementsprechend wird innerhalb eines Zeitintervalls der Sender 2b zweimal aktiviert, wobei aus den jeweils drei angrenzenden Empfängern 5b, 5a, 5b' unterschiedliche Empfängerpaare von aneinander angrenzenden Empfängern gebildet werden und bei der ersten Senderaktivierung die Differenz der Empfangssignale des Empfängerpaares 5b, 5a, und bei der zweiten Senderaktivierung die Differenz der Empfangssignale des Empfängerpaares 5a, 5b' gebildet wird.

Diese Auswertung ist in den Figuren 3a bis 3d dargestellt, und zwar für den Fall, dass das Objekt 6 in der ungünstigsten Stellung, genau zwischen den zwei Empfangslinsen 14a und 14b' angeordnet ist. Zunächst ist der Sender 2b aktiv (Figuren 3a, 3b), das heißt über die Sendelinse 13b wird Sendelicht emittiert. Das reflektierte und aufgestreute Empfangslicht trifft die benachbarten Empfangslinsen 14b, 14a, 14b'. Der Empfangslichtfleck ist mit der Bezugsziffer 4 bezeichnet.

Bei der ersten Aktivierung des Senders 2b wird wie in Figur 3a durch Schraffur der Empfangslinsen 14a, 14b angedeutet, die Differenz der Empfangssignale der Empfänger 5a, 5b gebildet. Bei der zweiten Senderaktivierung wird, wie in Figur 3b durch Schraffur der Empfangslinsen 14a, 14b' angedeutet, die Differenz der Empfangssignale der Empfänger 5a, 5b' gebildet.

Entsprechendes gilt für die Figuren 3c, 3d, welche die Aktivierung des Senders 2a' zeigen. Bei der ersten Aktivierung des Senders 2a' wird die Differenz der Empfangssignale der Empfänger 5a, 5b' gebildet (Figur 3c). Bei der zweiten Aktivierung des Senders 2a' wird die Differenz der Empfangssignale der Empfänger 5a', 5b' gebildet (Figur 3d).

Durch die ungünstige Lage des Objekts 6 deckt dieses, wie in Figur 3b gezeigt, die Empfangslinsen 14a und 14b' gleich stark ab, wodurch sich die Signaldifferenz der Empfangssignale der beiden Empfänger 5a, 5b' gegenüber dem freiem Überwachungsbereich nicht ändert. Die Änderung der Summe der Empfangssignale kann dabei so gering sein, dass das Objekt 6 auch nicht über eine Summenauswertung der Empfangssignale erkannt wird.

Ebenso kann es sich in Figur 3c verhalten, wo über die Sendelinse 13a' vom Sender 2a' Licht ausgesendet wird und die Differenz der Empfangssignale der Empfänger 5a, 5b' ausgewertet wird.

Ganz anders verhält es sich in Figur 3a, wo das Objekt 6 die Empfangslinse 14a, jedoch nicht die Empfangslinse 14b abdeckt, wodurch eine deutliche Änderung der Differenz der Empfangssignale der Empfänger 5a, 5b gegenüber dem freien Strahlengang erhalten wird.

Im vierten Detektionsschritt wird das Objekt 6 nochmals in der Kombination nach Figur 3d erkannt, wenn das Sendelicht durch die Sendelinse 13a' fällt und die Differenz der Empfangssignale der Empfänger 5a', 5b' gebildet wird.

Das Ausführungsbeispiel gemäß Figur 3 zeigt, dass auch bei ungünstiger Lage des Objekts 6 im Überwachungsbereich dieses in wenigstens einem der Detektionsschritte noch erkannt wird.

Figur 5 zeigt die Ausbildung eines Verstärkerschaltnetzwerks 8 für die Lichtgitter-Anordnung gemäß Figur 2.

In der Anordnung gemäß Figur 2 bilden erste Empfänger 5a, 5a' eine erste (linke) Spalte, die in Figur 5 mit a bezeichnet ist. In der Anordnung gemäß Figur 2 bilden weiterhin zweite Empfänger 5b, 5b' eine zweite (rechte) Spalte, die in Figur 5 mit b bezeichnet ist.

Alle in Spalte b angeordneten Empfänger 5b, 5b' liefern positive (zum Summationspunkt zufließende) Fotoströme (Empfangssignale), die in der Spalte a angeordneten Empfänger 5a, 5a' liefern negative (abfließende) Fotoströme (Empfangssignale). Entsprechend Figur 3a sind beispielhaft nur die Schalter 16b und 16a geschlossen, so dass das durch die Empfangslinsen 14a und 14b gelangende Empfangslicht Fotoströme generiert, die im Summationspunkt zu- und abfließen und die Differenz durch den Stromspannungsumsetzer 17b in die Differenzspannung Ud umgesetzt wird. Durch die Differenzbildung im Schaltungsknoten (Summationspunkt) kann im Verstärker keine Übersteuerung entstehen. Außerdem kann ein Strom-Spannungsumsetzer 17b für mehrere Empfangselemente genutzt werden, die über das einfache Schaltnetzwerk, bestehend aus dem Schalter 16a, 16b, zugeschaltet werden. Jeweils im gleichen Detektionsschritt wird durch den Strom-Spannungsumsetzer 17a die der Summe entsprechende Spannung Us gebildet. Für den Fall, dass die Differenzänderung sehr klein ist, wird durch die Änderung der Spannung Us geprüft, ob ein Objekt 6 vorliegt. Zum Beispiel ergibt sich bei vollständiger Unterbrechung der Lichtstrecke durch ein großes Objekt 6 eine geringe Differenz Ud, aber eine große Änderung der Spannung Us.

### Bezugszeichenliste

- (1): Lichtgitter
- (2): Sender
- (2'): Sender
- (2"): Sender
- (2a): Sender
- (2a'): Sender
- (2b): Sender
- (2b'): Sender
- (3): Sendelichtstrahlen
- (3'): Sendelichtstrahlen
- (3"): Sendelichtstrahlen
- (4): Empfangslichtstrahlen
- (5): Empfänger
- (5'): Empfänger
- (5"): Empfänger
- (5a): Empfänger
- (5a'): Empfänger
- (5b): Empfänger
- (5b'): Empfänger
- (6): Objekt
- (7): Reflektor
- (8): Verstärkerschaltnetzwerk
- (9): Schaltausgang
- (10): Schnittstelle
- (11): Auswerteeinheit
- (12): Gehäuse
- (13a): Sendelinse
- (13a'): Sendelinse
- (13b): Sendelinse
- (13b'): Sendelinse
- (14a): Empfangslinse
- (14a'): Empfangslinse
- (14b): Empfangslinse
- (14b'): Empfangslinse
- (15): Tubus
- (16a): Schalter
- (16b): Schalter
- (17a): Strom-Spannungsumsetzer
- (17b): Strom-Spannungsumsetzer

## Patentansprüche

1. Lichtgitter zur Erfassung von Objekten in einem Überwachungsbereich, mit einer Sender/Empfänger-Anordnung von Sendelichtstrahlen emittierenden und Empfangslichtstrahlen empfangenden Empfängern an einem ersten Rand des Überwachungsbereichs und einem am gegenüberliegenden zweiten Rand des Überwachungsbereichs angeordneten Reflektor, **dadurch gekennzeichnet, dass** die Sender-Empfänger-Anordnung so ausgebildet ist, dass die in einem Gehäuse (12) angeordneten Sender (2, 2', 2", 2a, 2a', 2b, 2b') und Empfänger (5, 5', 5", 5a, 5a', 5b, 5b') alternierend in zwei versetzt zueinander liegenden Reihen angeordnet sind, und dass zu jedem Sender (2, 2', 2", 2a, 2a', 2b, 2b') wenigstens zwei benachbarte Empfänger (5, 5', 5", 5a, 5a', 5b, 5b') vorhanden sind, so dass bei freiem Überwachungsbereich die Sendelichtstrahlen (3, 3', 3") des jeweiligen Senders (2, 2', 2", 2a, 2a', 2b, 2b') über den Reflektor (7) als Empfangslichtstrahlen (4) auf die benachbarten Empfänger (5, 5', 5", 5a, 5a', 5b, 5b') geführt sind, dass die Sender (2, 2', 2", 2a, 2a', 2b, 2b') einzeln nacheinander aktiviert sind, dass für jeden aktivierten Sender (2, 2', 2", 2a, 2a', 2b, 2b') die Differenz der Empfangssignale der benachbarten Empfänger (5, 5', 5", 5a, 5a', 5b, 5b') ausgewertet wird, wobei ein Objekt (6) im Überwachungsbereich als erkannt gilt, wenn die Differenz der Empfangssignale von einem Sollwert abweicht.

2. Lichtgitter nach Anspruch 1, **dadurch gekennzeichnet, dass** in diesem ein Schaltsignal generiert wird, welches einen Schaltzustand "Objekt erkannt" einnimmt, wenn für wenigstens einen Sender (2, 2', 2", 2a, 2a', 2b, 2b') Empfangssignale registriert werden, die von einem Sollwert abweichen.

3. Lichtgitter nach Anspruch 2, **dadurch gekennzeichnet, dass** die Sollwerte Parameterwerte bilden oder in einem Einlernvorgang bestimmt werden.

4. Lichtgitter nach einem der Ansprüche 2 oder 3, **dadurch gekennzeichnet, dass** die Empfangssignale der Empfänger (5, 5', 5", 5a, 5a', 5b, 5b') jeweils mit einem Schwellwert bewertet werden, und dass das Schaltsignal den Schaltzustand "Objekt erkannt" einnimmt, wenn wenigstens ein Empfangssignal unterhalb des Schwellwerts liegt.

5. Lichtgitter nach einem der Ansprüche 1 bis 4, **dadurch gekennzeichnet, dass** für den Fall, dass zu einem Sender (2, 2', 2", 2a, 2a', 2b, 2b') drei benachbarte Empfänger (5, 5', 5", 5a, 5a', 5b, 5b') vorgesehen sind, der Sender (2, 2', 2", 2a, 2a', 2b, 2b') zwei Mal hintereinander aktiviert wird, wobei bei der ersten Senderaktivierung die Differenz der Empfangssignale eines ersten und zweiten Empfängers (5, 5', 5", 5a, 5a', 5b, 5b') gebildet wird, und wobei bei der zweiten Senderaktivierung die Differenz der Empfangssignale des zweiten und dritten Empfängers (5, 5', 5", 5a, 5a', 5b, 5b') gebildet wird.

## Claims

1. Light curtain for detection of objects in a monitoring region, comprising a transmitter/receiver arrangement of receivers, which emit transmitted light beams and receive received light beams, at a first edge of the monitoring region and a reflector arranged at the opposite, second edge of the monitoring region, **characterised in that** the transmitter/receiver arrangement is so constructed that the transmitters (2, 2', 2", 2a, 2a', 2b, 2b') and receivers (5, 5', 5", 5a, 5a', 5b, 5b') arranged in a housing (12) are arranged in alternation in two rows offset relative to one another, and that at least two adjacent receivers (5, 5', 5", 5a, 5a', 5b, 5b') are present for each transmitter (2, 2', 2", 2a, 2a', 2b, 2b') so that when the monitoring region is free the transmitted light beams (3, 3', 3") of the respective transmitter (2, 2', 2", 2a, 2a', 2b, 2b') are guided by way of the reflector (7) as received light beams (4) to the adjacent receiver (5, 5', 5", 5a, 5a', 5b, 5b'), that the transmitters (2, 2', 2", 2a, 2a', 2b, 2b') are individually activated in succession and that for each activated transmitter (2, 2', 2", 2a, 2a', 2b, 2b') the difference of the received signals of the adjacent receivers (5, 5', 5", 5a, 5a', 5b, 5b') is evaluated, wherein an object (6) counts as recognised in the monitoring region when the difference of the received signals departs from a target value.

2. Light curtain according to claim 1, **characterised in that** a switching signal is generated therein which adopts a switching state of 'object recognised' when received signals departing from the target value are registered for at least one transmitter (2, 2', 2", 2a, 2a', 2b, 2b').

3. Light curtain according to claim 2, **characterised in that** the target values form parameter values or are determined in a learning process.

4. Light curtain according to one of claims 2 and 3, **characterised in that** the received signals of the receivers (5, 5', 5", 5a, 5a', 5b, 5b') are each evaluated by a respective threshold value and that the switching signal adopts the switching state of 'object recognised' when at least one received signal lies below the threshold value.

5. Light curtain according to any one of claims 1 to 4, **characterised in that** if three adjacent receivers (5, 5', 5", 5a, 5a', 5b, 5b') are provided for one transmitter (2, 2', 2", 2a, 2a', 2b, 2b') the transmitter (2, 2', 2", 2a, 2a', 2b, 2b') is activated twice in succession, wherein in the case of the first transmitter activation the difference of the received signals of a first and a second receiver (5, 5', 5", 5a, 5a', 5b, 5b') is formed and wherein in the case of the second transmitter activation the difference of the received signals of the second and third receiver (5, 5', 5", 5a, 5a', 5b, 5b') is formed.

## Revendications

1. Barrière immatérielle pour la détection d'objets dans une zone de surveillance, avec un agencement émetteur/récepteur formé *(d'émetteurs)* émettant des rayons lumineux d'émission et de récepteurs recevant des rayons lumineux de réception sur un premier bord de la zone de surveillance et un réflecteur disposé sur le deuxième bord opposé de la zone de surveillance, **caractérisée en ce que** l'agencement émetteur/récepteur est conçu de sorte que les émetteurs (2, 2', 2", 2a, 2a', 2b, 2b') et les récepteurs (5, 5', 5", 5a, 5a', 5b, 5b') disposés dans un boîtier (12) soient, en alternance, disposés en deux rangées décalées l'une par rapport à l'autre et qu'au moins deux récepteurs (5, 5', 5", 5a, 5a', 5b, 5b') adjacents soient prévus pour chaque émetteur (2, 2', 2", 2a, 2a', 2b, 2b'), de sorte qu'en cas de zone de surveillance libre, les rayons lumineux d'émission (3, 3', 3") de l'émetteur (2, 2', 2", 2a, 2a', 2b, 2b') respectif soient guidés par le réflecteur (7) en tant que rayons lumineux de réception (4) sur les récepteurs (5, 5', 5", 5a, 5a', 5b, 5b') adjacents, que les émetteurs (2, 2', 2", 2a, 2a', 2b, 2b') sont activés individuellement l'un après l'autre, que pour chaque émetteur (2, 2', 2", 2a, 2a', 2b, 2b') activé, la différence des signaux de réception des récepteurs (5, 5', 5", 5a, 5a', 5b, 5b') adjacents est évaluée, un objet (6) étant considéré comme détecté dans la zone de surveillance lorsque la différence des signaux de réception diffère d'une valeur de consigne.

2. Barrière immatérielle selon la revendication 1, **caractérisée en ce qu'**un signal de commutation est généré dans celle-ci, lequel prend un état de commutation « objet détecté » lorsque des signaux de réception qui diffèrent d'une valeur de consigne sont enregistrés pour au moins un émetteur (2, 2', 2", 2a, 2a', 2b, 2b').

3. Barrière immatérielle selon la revendication 2, **caractérisée en ce que** les valeurs de consigne forment des valeurs de paramètres ou sont déterminées dans un processus d'apprentissage.

4. Barrière immatérielle selon l'une des revendications 2 ou 3, **caractérisée en ce que** les signaux de réception des récepteurs (5, 5', 5", 5a, 5a', 5b, 5b') sont évalués chaque fois avec une valeur seuil, et que le signal de commutation prend l'état de commutation « objet détecté » lorsqu'au moins un signal de réception est inférieur à la valeur seuil.

5. Barrière immatérielle selon l'une des revendications 1 à 4, **caractérisée en ce que** dans le cas où trois récepteurs (5, 5', 5", 5a, 5a', 5b, 5b') adjacents sont prévus pour un émetteur (2, 2', 2", 2a, 2a', 2b, 2b'), l'émetteur (2, 2', 2", 2a, 2a', 2b, 2b') est activé deux fois de suite, la différence des signaux de réception d'un premier et d'un deuxième récepteur (5, 5', 5", 5a, 5a', 5b, 5b') étant formée lors de la première activation de l'émetteur, et la différence des signaux de réception du deuxième et du troisième récepteur (5, 5', 5", 5a, 5a', 5b, 5b') étant formée lors de la deuxième activation de l'émetteur.
